Europäisches Patentamt

European Patent Office

Office européen des brevets

(19)

(11) EP 1 101 965 B1

(12) EUROPÄISCHE PATENTSCHRIFT

(45) Veröffentlichungstag und Bekanntmachung des Hinweises auf die Patenterteilung:
24.09.2003 Patentblatt 2003/39

(51) Int Cl.⁷: **F16D 23/06**, F16D 23/02

(21) Anmeldenummer: 00124643.8

(22) Anmeldetag: 10.11.2000

(54) **Mehrfach-Synchronisiereinheit für Schaltgetriebe**

Multiple synchronizer assembly for motor vehicle gear box.

Unité de synchronisation multiple pour transmission de véhicule automobile

(84) Benannte Vertragsstaaten:
**AT DE FR GB IT**

(30) Priorität: **15.11.1999 DE 29920027 U**

(43) Veröffentlichungstag der Anmeldung:
**23.05.2001 Patentblatt 2001/21**

(73) Patentinhaber: **HOERBIGER Antriebstechnik GmbH**
**86956 Schongau (DE)**

(72) Erfinder: **Simmelbauer, Thomas**
**87616 Marktoberdorf (DE)**

(74) Vertreter: **Schmitz, Hans-Werner, Dipl.-Ing.**
**Hoefer & Partner**
**Patentanwälte**
**Gabriel-Max-Strasse 29**
**81545 München (DE)**

(56) Entgegenhaltungen:
US-A- 4 732 247     US-A- 5 105 927
US-A- 5 135 087     US-A- 5 657 844

• PATENT ABSTRACTS OF JAPAN vol. 1996, no. 12, 26. Dezember 1996 (1996-12-26) & JP 08 200396 A (HINO MOTORS LTD), 6. August 1996 (1996-08-06)

**Beschreibung**

Die Erfindung betrifft eine Mehrfach-Synchronisiereinheit für Schaltgetriebe nach dem Oberbegriff des Anspruches 1. Eine solche Synchronisiereinheit ist aus US-A-5 657 844 bekannt.

Zum technischen Hintergrund vorliegender Erfindung ist zu sagen, daß zu Beginn des Einlegens eines Ganges in einem Schaltgetriebe normalerweise eine Drehzahldifferenz zwischen dem zu schaltenden Gangrad und der Getriebewelle an der Schaltstelle vorliegt. Eine Möglichkeit, diese Drehzahldifferenz abzubauen, besteht in der Verwendung von konischen Sperrsynchronisierungen, mit Hilfe derer ein Reibmoment erzeugt wird, das so lange wirkt, bis ein Drehzahlausgleich erreicht wird. Erst nach dem Zusammenbrechen des Reibmomentes ist bei korrekter Funktion der Synchronisierung ein Durchschalten in die Schaltverzahnung, das heißt die Bildung des Formschlusses zwischen dem Gangrad und der entsprechenden Getriebewelle, möglich.

Zur Erhöhung des Schaltkomforts kommen häufig Mehrfachkonus-Synchronisierungen zum Einsatz. Diese haben den Vorteil, daß der Drehzahlangleich durch das Zusammenwirken aller Reibmomente an den konischen Reibflächen schneller stattfindet.

Bei derartigen Synchronisierungen kennt man sogenannte ungekoppelte Systeme, bei denen es keinen direkten Formschluß zwischen dem Außensynchronring und dem Innensynchronring bei Doppelkonussystemen bzw. zwischen dem Außensynchronring und dem inneren Reibring bzw. Zwischenring bei Dreifachkonus-Systemen gibt.

Bei einer gekoppelten Mehrfachkonus-Synchronisiereinheit, wie sie dem Oberbegriff des Anspruches 1 entspricht, sind der Außensynchronring und der Innensynchronring in Umfangsrichtung formschlüssig verbunden, so daß die Summe aller Reibmomente an den konischen Reibflächen während der Synchronisationsphase dem Entsperrmoment an der Sperrverzahnung der Synchronisationsphase entgegenwirkt. Dieser Formschluß wird durch ineinandergreifende Mitnehmernocken und Mitnehmernuten realisiert.

Ein Problem derartiger Synchronisiereinheiten ist jedoch darin zu sehen, daß eine gewisse Gefahr für ein Verklemmen der Synchronisiereinheit besteht. Hierbei ergibt sich der Nachteil, daß bei einer verklemmten Synchroneinheit die Synchronisierung mit Gewalt aufgebrochen werden muß. Dies hat zur Folge, daß der Fahrer beim Schalten einen unangenehmen zweiten Druckpunkt spürt und das Durchschalten verzögert wird, womit eine große Einbuße an Schaltkomfort einhergeht.

Es ist daher Aufgabe der Erfindung, eine Mehrfachkonus-Synchronisiereinheit für Schaltgetriebe der im Oberbegriff des Anspruches 1 angegebenen Art zu schaffen, die auf einfache Art und Weise das Auftreten eines Verklemmens der Einheit reduziert bzw. gänzlich beseitigt.

Die Lösung dieser Aufgabe erfolgt durch die Merkmale des Anspruches 1.

Durch die in Richtung auf die Längsachse der Getriebewelle konvergierende Neigung zumindest einer der Kontaktflächen der Mitnehmernocken des Innensynchronringes wird eine zusätzliche Axialkraftkomponente erzeugt, die das Lösen der entsprechenden konischen Reibflächen unterstützt. Damit wird die Gefahr des Verklemmens der Synchronisiereinheit in sich reduziert bzw. abhängig vom Neigungswinkel beseitigt. Unter konvergierender Ausbildung wird im Rahmen dieser Anmeldung eine Anordnung verstanden, die vom ringförmigen Körper des Innensynchronringes aus gesehen wird, so daß also der breitere Nockenfuß unmittelbar am Ringkörper angeformt ist und sich von dort aus der Mitnehmernocken kegestumpfförmig vom Ringkörper nach außen verjüngt.

Ein weiterer Vorteil der Erfindung ist darin zu sehen, daß Reibwertspitzen am Ende der Synchronisierphase abgebaut werden. Im Rahmen der Erfindung durchgeführte Untersuchungen haben hierbei ergeben, daß sich durch die erfindungsgemäße Ausbildung ein wesentlich ruhigerer Reibwertverlauf ergibt. Reibschwingungen während der Synchronisierphase werden im Vergleich zu bekannten Einheiten wesentlich reduziert.

Ferner wird erreicht, daß auch bei Nichtbetätigung der Synchronisierung, also im Leerlauf, das Schaltgetriebe wesentlich weniger zum Schwingen angeregt wird, da sich aufgrund der Massenträgheiten und Ölplanschverluste die Synchronisiereinheit lüftet, das heißt, daß sich der Außensynchronring an die Synchronnabe und entsprechend der Innensynchronring an die Kupplungsscheibe anlegt. Das Taumeln der Synchronisiereinheit wird somit im Gegensatz zu bekannten Einheiten wesentlich reduziert.

Ferner ergibt sich der Vorteil, daß die erfindungsgemäße Ausbildung bei allen Materialien herkömmlicher Synchronisiersysteme zur Anwendung kommen kann, wie beispielsweise bei Messing, Sintermaterialien und Stahl.

Die Unteransprüche haben vorteilhafte Weiterbildungen zum Inhalt.

Bei jedem Mitnehmernocken ist vorzugsweise zumindest eine Flanke bzw. Anlagefläche in Richtung auf die Längsachse der Getriebewelle konvergierend ausgebildet. Bei einer besonders bevorzugten Ausführungsform sind jedoch bei jedem Mitnehmernocken beide Flanken bzw. Anlageflächen geneigt ausgebildet.

Die bevorzugten Neigungswinkel liegen in einem Bereich zwischen 3° bis 45°, wobei ein besonders bevorzugter Winkel 10° beträgt.

Die Erfindung kann bei jeglicher Art von Mehrfachkonus-Synchronisiereinheiten zur Anwendung kommen, insbesondere bei Doppelkonus- und Dreifachkonus-Synchronisiersystemen.

Weitere Einzelheiten, Merkmale und Vorteile der Erfindung ergeben sich aus nachfolgender Beschreibung eines Ausführungsbeispieles anhand der Zeichnungen.

Es zeigt:

Fig. 1 eine perspektivische schematisch vereinfachte auseinandergezogene Darstellung der Basiskomponenten einer Mehrfachkonus-Synchronisiereinheit in Form einer Doppelkonus-Synchronisiereinheit.

Fig. 2 die Einzelheit X der Fig. 1 in vergrößerter Darstellung.

Fig. 3 die Einzelheit Y der Fig. 1 in vergrößerter Darstellung und

Fig. 4 die Einzelheit Z der Fig. 1 in vergrößerter Darstellung.

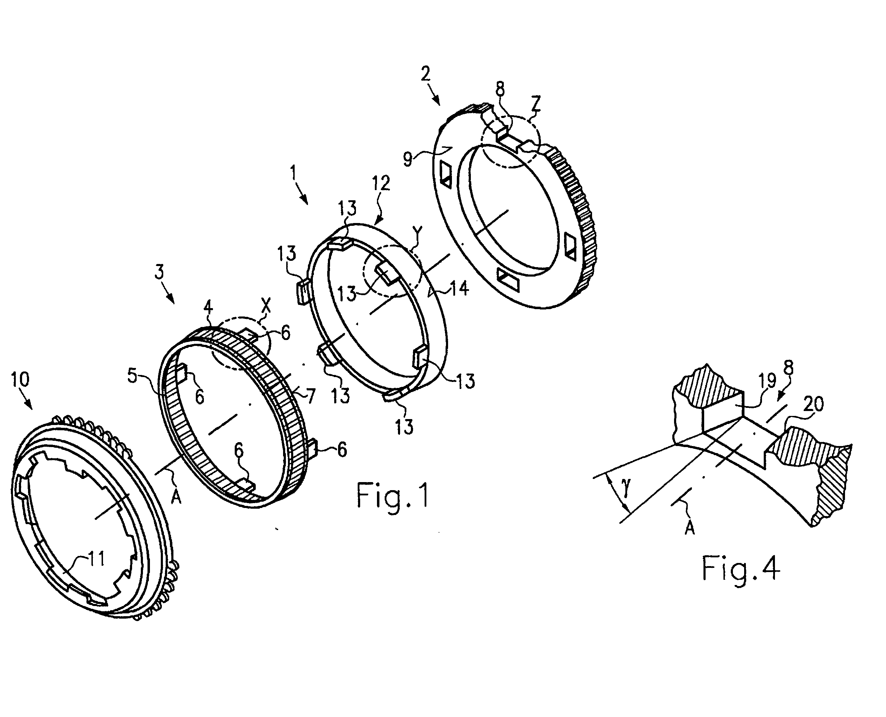

In Fig. 1 sind die für die Erläuterung vorliegender Erfindung erforderlichen Bauelemente einer erfindungsgemäßen Mehrfach-Synchroiereinheit 1 für ein Schaltgetriebe dargestellt.

Dementsprechend ist zunächst eine Kupplungsscheibe 2 vorgesehen, die mit einem auf einer nicht dargestellten Getriebewelle gelagerten ebenfalls nicht dargestellten Losrad des Schaltgetriebes verbindbar ist, wobei die Getriebewelle eine in den Fig. 1 bis 4 strichpunktiert gezeichnete Längsachse A aufweist.

Die erfindungsgemäße Synchronisiereinheit 1 weist ferner einen Reibring 3 auf, der an seinem Außenumfang eine erste konische Reibfläche 4 und an seinem Innenumfang eine zweite konische Reibfläche 5 aufweist. Die Reibflächen können beispielsweise als Sinterbeläge ausgebildet sein.

Ferner weist der Reibring 3 eine Mehrzahl von ersten Mitnehmernocken 6 an einer Stirnfläche 7 auf. Im Beispielsfalle sind vier derartige erste Mitnehmernocken 6 vorgesehen. Die Mitnehmernocken 6 greifen in vorzugsweise komplementär ausgebildete erste Mitnehmernuten 8 in einer im Montagezustand dem Reibring 3 zugewandten Stirnfläche 9 der Kupplungsscheibe 2 ein.

Ferner weist die Synchronisiereinheit 1 einen Außensynchronring 10 auf, der an einem nicht näher dargestellten Synchronkörper des Schaltgetriebes geführt ist und eine Innenreibläche 11 aufweist, die mit der äußeren ersten Reibfläche 4 des Reibrings 3 zusammenwirkt.

Schließlich ist ein Innensynchronring 12 vorgesehen, der zweite Mitnehmernocken 13 aufweist, die in in Fig. 1 nicht sichtbare vorzugsweise komplementäre zweite Mitnehernuten des Außensynchronrings 10 greifen. Der Innensynchronring 12 weist ferner eine Außenreibfläche 14 auf, die mit der inneren zweiten Reibfläche 5 des Reibringes 13 zusammenwirkt.

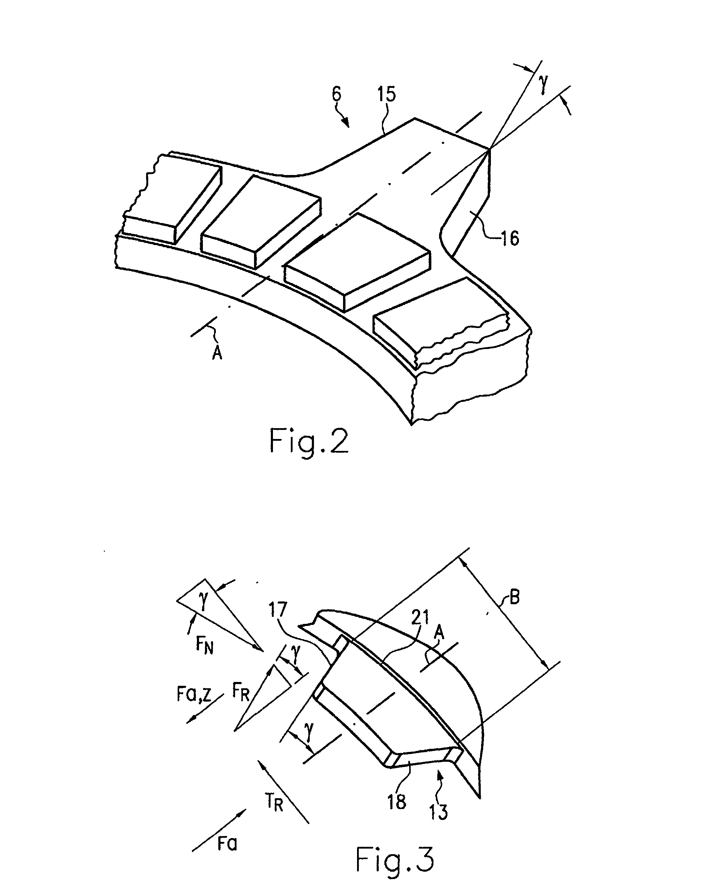

Wie sich aus Fig. 2 ergibt, kann der Mitnehmernocken 6 des Reib- bzw. Zwischenringes 3 im Beispielsfalle zwei Flanken 15, 16 aufweisen, die jeweils in einem Winkel γ zur Längsachse A geneigt angeordnet sind. Die Darstellung der Fig. 2 verdeutlicht hierbei, daß sich somit eine sich in Richtung auf die Längsachse A ergebende konvergierende, kegelstumpfförmige Ausbildung des Mitnehmernockens 6 ergibt. Grundsätzlich ist es jedoch auch möglich, daß lediglich eine der beiden Flanken 15 oder 16 in dem genannten Winkel γ angeordnet ist.

Aus Fig. 3 ergibt sich eine entsprechende Ausbildung des Mitnehmernockens 13 des Innensynchronringes 12 mit zwei konvergierenden Flanken 17, 18, so daß sich ebenfalls eine kegelstumpfförmige Ausbildung des Mitnehmernockens 13 ergibt. In Fig. 3 sind ferner die sich ergebenden Kräfte eingezeichnet.

Aus Fig. 4 ergibt sich die Ausbildung der Mitnehmernut 8, deren beide Anlageflächen 19 und 20 bei der hier dargestellten besonders bevorzugten Ausführungsform im gleichen Winkel y zur Längsachse A angeordnet sind, so daß der Mitnehmernocken 16 in die Mitnehmernut 8 eingreifen kann. Auch hier ist es möglich, daß nur eine der beiden Anlageflächen 19 oder 20 geneigt ausgebildet ist, wobei sich dies natürlich nach der jeweiligen Neigung der Flanken 15 bzw. 16 des Mitnehmernockens 6 richtet, so daß stets sichergestellt ist, daß vorzugsweise eine komplementäre Ausbildung der beiden Teile erreichbar ist.

Die Mitnehmernuten im Außensynchronring 10 sind vorzugsweise mit parallelen Anlageflächen, also ohne konvergierende Verjüngung, ausgebildet. Die Öffnung der Mitnehmernuten bzw. der Abstand der parallelen Anlageflächen entspricht hierbei zumindest der Breite B des Nockenfußes 21, wie dies aus Fig. 3 ersichtlich ist

Zur Ergänzung der Erkenntnisse vorliegender Erfindung sind in der nachfolgenden Formel die physikalischen, mechanischen und tribologischen Zusammenhänge dargestellt, wobei mit der Formel der Grenzwert von Doppel- bzw. Dreifachkonus-Synchroneinheiten mit geneigten Kontaktflächen der Mitnehmernocken bzw. Mitnehmernuten berechnet werden kann.

***Darstellung der Zusammenhänge in einer Berechnungsformel***

$\mu_x$: Grenzreibwert der Synchronisation (Funktionsbzw. Sperrgrenze)

$\mu_I$: Reibwert an der Sperrverzahnung (Index)

$\mu_N$: Reibwert an den Kontaktflächen der Nocken

$\mu_A$: Reibwert an der Anlagefläche des Innensynchronrings an die Kupplungsscheibe bzw. an das Gangrad bei Doppelkonussynchronisierungen

$R_K$: Mittlerer Reibradius aller konischen Reibflächen

$R_I$: Wirkradius der Sperrverzahnung

$R_N$: Mittlerer Radius der Kontakflächen der Nocken

$R_A$: Mittlerer Radius der Anlageflächen des Innensynchronrings

$\alpha$: Mittlerer Konuswinkel der Reibflächen

$\beta$: Halberdachschrägenwinkel der Sperrverzahnung bei symmetrischer Sperrverzahnung bzw. der entsprechende, wirkende Winkel der Sperrverzahnung

$\gamma$: Neigungswinkel der Kontaktflächen der Nocken

$i$: Anzahl der gekoppelten konischen Reibflächen

$z$: Variable

$$z = i\text{-}1$$

*Verwendete Substitutionen:*

$$A = \cos(\beta) - \mu_I \cdot \sin(\beta)$$

$$B = \sin(\beta) + \mu_I \cdot \cos(\beta)$$

$$C = \sin(\gamma) - \mu_N \cdot \cos(\gamma)$$

$$D = \cos(\gamma) + \mu_N \cdot \sin(\gamma)$$

$$\mu_K = \frac{\sin(\alpha) \cdot (A \cdot R_I - (3-i) \cdot \mu_A \cdot B \cdot R_A) \cdot D \cdot R_N}{(i \cdot B \cdot D \cdot R_N - C((3-i) \cdot \mu_A \cdot B \cdot R_A + z \cdot A \cdot R_I)) \cdot R_K}$$

- Aus der Formel geht hervor, daß der Grenzreibwert mit zunehmendem Neigungswinkel $\gamma$ ansteigt.

**Patentansprüche**

1. Mehrfachkonus-Synchronisiereinheit (1) für Schaltgetriebe

  - mit einer Kupplungsscheibe (2), die mit einem auf einer Getriebewelle gelagerten Losrad des Schaltgetriebes verbindbar ist, wobei die Getriebewelle eine Längsachse (A) aufweist;

  - mit zumindest einem Reibring (3), der an seinem Außenumfang eine erste konische Reibfläche (4) und an seinem Innenumfang eine zweite konische Reibfläche (5), und der erste Mitnehmernocken (6) an einer Stirnseite (7) aufweist, die in erste Mitnehmernuten (8) in einer dem Reibring (3) zugewandten Stirnfläche (9) der Kupplungsscheibe (2) eingreifen;

  - mit einem Außensynchronring (10), der an einem Synchronkörper des Schaltgetriebes geführt ist und eine Innenreibfläche (11) aufweist, die mit der äußeren ersten Reibfläche (4) des Reibringes (3) zusammenwirkt; und

  - mit einem Innensynchronring (12), der zweite Mitnehmernocken (13) aufweist, die in zweite Mitnehmernuten des Außensynchronringes (10) eingreifen, und der eine Außenreibfläche (14) aufweist, die mit der inneren Reibfläche (5) des Reibringes (3) zusammenwirkt, **dadurch gekennzeichnet,**

  - **daß** der zweite Mitnehmernocken (13) zumindest eine Flanke (17, 18) aufweist, die in einem spitzen Winkel ($\gamma$) zur Längsachse (A) konvergierend angeordnet ist.

2. Synchronisiereinheit nach Anspruch 1, **dadurch gekennzeichnet, daß** der zweite Mitnehmernocken (13) zwei Flanken (17, 18) aufweist, die im spitzen Winkel ($\gamma$) zur Längsachse (A) konvergierend geneigt angeordnet sind.

3. Synchronisiereinheit nach Anspruch 1, **dadurch gekennzeichnet, daß** die zweite Mitnehmernut des Außensynchronringes (10) parallel angeordnete Anlageflächen (19 bzw. 20) aufweist, die in einem Abstand zumindest entsprechend der Breite (B) des Nockenfußes (21) des zweiten Mitnehmernockens (13) angeordnet sind.

4. Synchronisiereinheit nach Anspruch 2, **dadurch gekennzeichnet, daß** die zweite Mitnehmernut vorzugsweise zwei Anlageflächen aufweist, die im spitzen Winkel ($\gamma$) zur Längsachse (A) angeordnet sind.

5. Synchronisiereinheit nach einem der Ansprüche 1 bis 4, **dadurch gekennzeichnet, daß** der Winkel ($\gamma$) 3° bis 45°, vorzugsweise 10° beträgt.

**Claims**

1. Multiple synchronizing unit (1) for manual transmissions, comprising

  - a clutch disk (2) connectable to an idler of the transmission that is supported on a transmission shaft, said transmission shaft having a longitudinal axis (A);

  - at least one friction ring (3) which is provided on its outer circumference with a first conical friction surface (4) and on its inner circumference with a second conical friction surface (5), and has first drive cams (5) on a front side (7) that engage into first drive grooves (8) in a face (9) of the clutch disk (2) that faces the friction ring (3);

- an outer synchronizing ring (10) which is guided on a synchronizing body of said transmission and has an inner friction surface (11) that cooperates with the outer first friction surface (4) of the friction ring (3); and

- an inner synchronizing ring (12) which comprises second drive cams (13) engaging into second drive grooves of the outer synchronizing ring (10) and which has an outer friction surface (14) cooperating with the inner friction surface (5) of the friction ring (3), **characterized in**

- **that** the second drive cam (13) has at least one flank (17, 18) which is arranged to converge in an acute angle ($\gamma$) relative to the longitudinal axis (A).

2. The synchronizing unit according to claim 1, **characterized in that** the second drive cam (13) has two flanks (17, 18) that are arranged in inclined fashion to converge in the acute angle ($\gamma$) relative to the longitudinal axis (A).

3. The synchronizing unit according to claim 1, **characterized in that** the second drive groove of the outer synchronizing ring (10) comprises contact surfaces (19 and 20, respectively) that are arranged in parallel and at a distance corresponding at least to the width (B) of the cam base (21 ) of the second drive cam (13).

4. The synchronizing unit according to claim 2, **characterized in that** the second drive groove is preferably equipped with two contact surfaces that are arranged at an acute angle ($\gamma$) relative to the longitudinal axis (A).

5. The synchronizing unit according to any one of claims 1 to 4, **characterized in that** the angle ($\gamma$) is 3° to 45°, preferably 10°.

**Revendications**

1. Unité de synchronisation à cônes multiples (1) pour boîte de vitesses, comprenant :

- un disque d'embrayage (2) pouvant être relié à une roue folle, logée sur un arbre de transmission, de la boîte de vitesses, l'arbre de transmission présentant un axe longitudinal (A) ;
- au moins un anneau de friction (3) qui présente sur sa circonférence extérieure une première surface de friction conique (4) et sur sa circonférence intérieure une deuxième surface de friction conique (5) et qui présente des premières cames d'entraînement (6) sur une face avant (7) qui s'engagent dans des premières rainures d'entraînement (8) dans une face avant (9), orientée vers l'anneau de friction (3), du disque d'embrayage (2) ;
- un anneau de synchronisation extérieur (10) qui est guidé au niveau d'un corps de synchronisation de la boîte de vitesses et présente une surface de friction intérieure (11) qui coopère avec la première surface de friction extérieure (4) de l'anneau de friction (3) ; et
- un anneau de synchronisation intérieur (12) qui présente des deuxièmes cames d'entraînement (13) qui s'engagent dans des deuxièmes rainures d'entraînement de l'anneau de synchronisation extérieur (14) et qui présente une surface de friction extérieure (14) qui coopère avec la surface de friction intérieure (5) de l'anneau de friction (3),

**caractérisée en ce que**

- la deuxième came d'entraînement (13) présente au moins un flanc (17, 18) qui est disposé de façon convergente sous un angle aigu ($\gamma$) par rapport à l'axe longitudinal (A).

2. Unité de synchronisation selon la revendication 1, **caractérisée en ce que** la deuxième came d'entraînement (13) présente deux flancs (17, 18) qui sont disposés en inclinaison convergente sous un angle aigu ($\gamma$) par rapport à l'axe longitudinal (A).

3. Unité de synchronisation selon la revendication 1, **caractérisée en ce que** la deuxième rainure d'entraînement de l'anneau de synchronisation extérieur (10) présente des surfaces de butée (19 ou 20) disposées en parallèle qui sont disposées à une distance correspondant au moins à la largeur (B) du pied de came (21) de la deuxième came d'entraînement (13).

4. Unité de synchronisation selon la revendication 2, **caractérisée en ce que** la deuxième rainure d'entraînement présente de préférence deux surfaces de butée qui sont disposées sous un angle aigu ($\gamma$) par rapport à l'axe longitudinal (A).

5. Unité de synchronisation selon l'une quelconque des revendications 1 à 4, **caractérisée en ce que** l'angle ($\gamma$) mesure de 3° à 45°, de préférence 10°.

EP 1 101 965 B1

Fig.1

Fig.4

Fig.2

Fig.3